# EUROPEAN PATENT SPECIFICATION

(11) **EP 4 048 898 B1**
(45) Date of publication and mention of the grant of the patent: **06.12.2023**
(21) Application number: 20793086.8
(22) Date of filing: 09.10.2020
(51) Int. Cl.: F04C 18/12, F04C 25/02, F04C 28/28

(54) **SENSOR ASSEMBLY**
SENSORANORDNUNG
ENSEMBLE CAPTEUR

(30) Priority: 23.10.2019 GB 201915349
(43) Date of publication of application: 31.08.2022
(73) Proprietor: Edwards Limited, Burgess Hill, Sussex RH15 9TW (GB)
(72) Inventor: MCBRIEN, Peter Anthony, West Sussex Burgess Hill Sussex RH19 5TW (GB); FISHER, Geoffrey Peter, Burgess Hill Sussex RH15 9TW (GB)
(74) Representative: Arnold, Emily Anne
(86) International application number: PCT/GB2020/052511
(87) International publication number: WO 2021/079087

(56) References cited:
- EP-A1- 3 064 775
- GB-A- 1 195 368
- JP-A- 2019 120 157

## Description

### Field of the Invention

The invention relates to a sensor assembly for use in apparatus with stationary and moving parts, such as vacuum pumps. The invention further relates to a vacuum pump comprising such a sensor assembly, and to a method for preventing failure of apparatus, such as vacuum pumps.

### Background to the Invention

Apparatus comprising both moving and stationary parts find use in a wide variety of technological areas. For instance, vacuum pumps are used in many industrial applications, including the manufacture of semiconductor devices, in which a benign and clean environment is preferred to minimise contamination during production of semiconductor wafers.

A dry vacuum pump, such as a Roots vacuum pump, is typically used to evacuate a chamber in which manufacture of the semiconductor wafers occurs. A Roots vacuum pump operates by pumping air with a pair of intermeshing lobed rotors mounted inside a stator. Dry vacuum pumps are particularly preferred for use in the manufacture of high-performance products such as semiconductor devices as they comprise no sealing fluid between the stator and rotor(s). This is desirable as sealing fluid can vaporise and migrate into the processing chamber, thus causing contamination of the semiconductor being processed.

Instead, the efficiency of the pump is dependent on maintaining the clearance between the stator and rotor(s), or any intermeshing rotor components, within specific tolerances. At present, this relies on good design and manufacturing techniques to maintain appropriate clearances throughout the operational cycles of the pump, including at increased temperatures. If a suitable clearance isn't maintained then the rotating mechanism seizes, which can cause costly and potentially irreparable damage to the pump and may result in significant time out-of-action.

In some pumps, sensors are used to measure the clearance between the stator and the rotor(s). The current state of the art is to use sensors that continuously measure and output data relating to the clearance between the stator and rotor(s). FR-A-2812041 discloses a dry vacuum pump of the Roots vacuum pump type in which a proximity sensor is mounted to the stator to detect the axial thermal expansion of the rotor. The signal produced by the sensor is used to control a stator cooling unit, in order to maintain the axial play of the rotor at a value greater than a minimum admissible value. This is achieved by determining whether the output signal of the sensor is above a predetermined threshold, whereupon an additional cooling circuit is activated.

WO-A-2017/025722 discloses a dry vacuum pump, in which a sensor is mounted to the stator to detect the absolute distance between a point on the surface of the rotor and the internal surface of the stator. In use, the sensor continuously measures the rotor to stator clearance and outputs the data to a processing circuit. These sensor systems each, when in use, continuously collect and output data regarding the relative positions of the stator and rotor(s). Due to the high volume and complexity of the output data, their processing and analysis requires specific technical knowledge and expertise that may not be possessed by the operator of the pump. Additionally, due to their complexity, sensors of this type are expensive to purchase and operate. As a result, it is commonplace for pumps to be run without any such sensor, risking catastrophic failure of the device.

GB1195368 discloses a Roots type blower with sensors able to close an electric circuit and so as to cause the drive to the input shaft of the blower to be stopped and/or to give a visible or audible warning.

Consequently, there is a requirement for a sensor suitable for use with a variety of apparatus with moving parts and, in particular, vacuum pumps such as a Roots vacuum pump, with reduced complexity and volume of data output, preferably with reduced cost.

Vacuum pumps often must run continuously for multiple days. Therefore, it is undesirable and potentially unfeasible to constantly monitor the output data from a sensor. Accordingly, there is also a requirement for a sensor which, if triggered, will cease operation of the pump to prevent failure.

The present invention addresses these and other problems with the prior art.

### Summary of the Invention

According to the invention, there is provided a sensor assembly according to claim 1 for use in an apparatus, the apparatus comprising at least one moving part and at least one stationary part.

The sensor assembly comprises a probe comprising a portion of an incomplete circuit. The probe is configured to form a complete circuit when engaged by the at least one moving part.

The sensor assembly further comprises means for mounting the sensor assembly to a stationary part of the apparatus. The assembly is configured to produce a signal when the circuit is completed.

The apparatus may comprise a mechanical device with two or more components in relative motion. For example, the apparatus may comprise a vacuum pump, such as a dry vacuum pump. In embodiments, the apparatus comprises a Roots vacuum pump. In alternative embodiments, the apparatus comprises a compressor pump. In use, if the probe is not engaged by the at least one moving part of the apparatus, the circuit remains incomplete such that no signal is output by the circuit. In the context of the present disclosure, the term "incomplete" takes its usual meaning in the art and, thus, refers to a state wherein the circuit has a break in it such that there is no current flow around the circuit.

When the sensor assembly is in use, the circuit is adapted to only output a signal when the probe is engaged by a component of the apparatus to which it is mounted, and it is adapted such that no signal is output otherwise. Advantageously, in comparison to the sensors of the prior art, the quantity of data output is low, as a signal is only produced when contact is made between the moving and stationary parts of the apparatus.

The assembly may be mounted to the stationary part such that the probe extends from the stationary part towards the moving part by a predetermined distance such that the assembly may be used to monitor if a clearance between the stationary and moving parts has reduced to below an acceptable clearance equal to or corresponding to the predetermined distance. In other words the distance between the two components has reduced below an allowable clearance distance. The clearance distance is typically selected by the user and depends upon the apparatus to which the device is mounted and the associated safety factors.

In embodiments, the sensor assembly is configured to activate a shut-down process of the apparatus when the signal is produced. For example, the assembly may comprise a cut-off switch configured such that when a signal is output it may activate the cut-off switch, ceasing operation of the apparatus. The cut-off switch may cease the power supplied to the apparatus, such that no further power is supplied until the switch is deactivated.

In embodiments, the cut-off switch may initiate a gradual reduction in the power supplied to the apparatus. For example, the shut-down process may be one of a pulsed shut-down or ramped shut-down process. This is beneficial, for example, to bring about an incremental reduction in rotational speed (i.e. power) of the moving part to prevent a further reduction in clearance between the moving part and the stationary part of the apparatus. Additionally or alternatively, the assembly may comprise means generate a "warning", such as an audio or visual alert, to the user when a signal is output to indicate that action is required, for example such that the user may activate the cut-off switch manually.

Advantageously, the shut-down process ensures that operation of the apparatus to which the assembly is mounted will cease, avoiding potential damage, for example the seizing of parts that are not designed to come into contact. This feature enables the apparatus to be run without direct supervision and/or with fewer maintenance breaks, with reduced risk of failure due to part seizure. This is beneficial as some apparatus, for example Roots vacuum pumps, may be required to be running continuously for several days, with only short breaks between the repetitive process cycles.

The probe may have an elongated, three-dimensional shape and may, for instance be substantially defined by a cylinder, although other suitable probe forms will be apparent to those skilled in the art. Typically, the cross-sectional length, e.g. the radius of the cylinder, may be between about 1.5 mm and about 5 mm, preferably between about 2 mm and about 4 mm, for example about 2.5 mm. The length of the probe may range from about 40 mm to about 100 mm, more preferably from about 60 mm to about 80 mm, for instance about 65 mm to about 70 mm, for example approximately 67 mm.

A first end of the probe may have a rounded shape, for example such that it takes the form generally of a hemisphere, the radius of which is equal to the radius of the cylinder. The first end of the probe may be configured to be engaged by a component of the apparatus, and a second, opposing end may comprise means for electrically coupling the probe to a circuit.

The assembly further comprises a casing. The casing is configured to sheathe a first portion of the probe such that, in use, a second portion of the probe protrudes from the casing. The casing comprises the means for mounting the sensor to the stationary part of the apparatus.

The assembly may further comprise means for adjusting the position of the probe relative to the casing. For example, in embodiments, the probe may comprise an external screw thread adapted to operatively engage with the means for adjusting the position of the probe relative to the casing. The means for adjusting the position of the probe relative to the casing may comprise a thumbwheel, wherein the thumbwheel comprises a central conduit with an internal screw thread within said central conduit, adapted to engage with the external screw thread of the probe. Alternatively, the means for adjusting the position of the probe relative to the casing may comprise a cam mechanism, or a lever mechanism, to adjust the position of the probe.

When the assembly comprises a thumbwheel, it may be configured such that, when the thumbwheel is rotated in a first direction, the interaction between the internal screw thread of the thumbwheel and the external screw thread of the probe causes the probe to move relative to the casing, such that the portion of the probe protruding from the casing increases. Additionally, when the thumbwheel is rotated in a second direction relative to the sensor, which is contrary to the first direction, the probe moves relative to the casing in an opposite direction, such that the portion of the probe protruding from the casing decreases. Advantageously, this enables the position of the probe relative to the casing to be adjusted, and hence the position of the probe within the apparatus may be adjusted, whilst the sensor is mounted to the apparatus.

The sensor may comprise means adapted to maintain a sealed vacuum, or alternatively a positive internal pressure, within the apparatus to which the sensor is mounted, during use of the apparatus. Preferably, under such circumstances, the position of the probe may still be adjusted. Typically, the means provided to maintain a sealed vacuum or sealed positive pressure within the apparatus comprises an O-ring seal, positioned around a portion of the probe within the casing. Other such suitable means of sealing the sensor assembly will be apparent to the person skilled in the art, their form typically depending upon the shape of the probe.

The means for mounting the sensor to an apparatus may comprise an external screw thread located upon the probe, which is configured to engage with a corresponding internal screw thread of the apparatus. Preferably, the longitudinal axis of the external screw thread is substantially the same as a longitudinal axis of the probe, such that the positional adjustment of the probe occurs substantially along this longitudinal axis. Preferably, the external screw thread may be integrated as part of the probe and is typically made from the same material as the casing.

The casing preferably comprises an insulating material capable of withstanding temperatures typically encountered during operation of apparatus such as vacuum pumps, for instance from about 0°C to about 250°C, and more preferably from about 20°C to about 150°C . Preferably the casing comprises a polymeric material, which is more preferably a high temperature polymer selected from a group comprising polyether ether ketone (PEEK), polyether sulfone (PES) or polytetrafluoroethylene (PTFE). Other useful casing materials comprise laminated plastic materials such as those available from Tufnol Composites Ltd. (Birmingham, UK) under the tradename TUFNOL. Most preferably, the casing comprises polyether ether ketone (PEEK).

According to the invention, the probe comprises at least two electrodes, wherein one electrode is a positive electrode and one electrode is a negative electrode. The at least two electrodes are separated by an electrically insulating body. A portion of each electrode is exposed from the electrically insulating body.

In embodiments, a first electrode is formed from an electrically conductive wire extending along the axis of the probe and a second electrode is formed from an electrically conductive tube surrounding and generally concentric with the first electrode. Alternatively, the electrodes may each comprise an electrically conductive wire, the two electrodes extending parallel to each other along the length of the probe.

Materials suitable for use as the insulating body are as described above for the casing material.

Preferably, the portion of each electrode that is exposed from the insulating body is comprised in, i.e. located on, the portion of the probe protruding from the casing. In use, when two or more electrodes are simultaneously engaged by a moving part of the apparatus, which is preferably electrically conductive, the circuit is completed, and a signal is output. This is achieved by the current flowing from a first electrode, through the moving part of the apparatus to a second electrode. Completion of the circuit may potentially be only momentary, depending upon the time which elapses between completion of the circuit and activation of the cut-off switch which ceases operation of the apparatus, and therefore also movement of the apparatus components.

According to the invention, at least a part of, and preferably all of, the portion of each electrode, which is exposed from the insulating body, is covered by a sacrificial coating. In use, when the sacrificial coating is contacted by a moving component of the apparatus, at least part of the sacrificial coating on each of the electrodes is removed enabling the circuit to be completed. This arrangement is particularly advantageous as it prevents 'false' completion of the circuit when there is no engagement of the electrodes by a moving, conductive component of the apparatus. An example of such a 'false' completion of the circuit is when condensation build-up on the probe bridges the gap between two of the electrodes and completes the circuit.

Typically, the sacrificial coating comprises a layer of electrically insulating paint or lacquer, such as a high temperature paint, for example. Preferably, the sacrificial coating is adapted to be removable when engaged by a moving component of the apparatus, without causing any damage to the moving component or the probe. It will be appreciated that such a coating may be applied to any of the embodiments described herein.

Typically, in this aspect of the present disclosure, the casing may comprise a metallic material, which may be similar to the materials from which the apparatus parts are made. For instance, it may comprise iron of steel and preferably comprises stainless steel.

In a further aspect, the present invention provides a vacuum pump comprising a sensor as previously described. More preferably, the vacuum pump is a dry vacuum pump with a roots, screw, claw, or scroll mechanism, and is yet more preferably a vacuum Roots booster.

Typically, the pump comprises at least one stator and at least one rotor. Preferably the stator comprises at least one internal chamber, in which at least one rotor is rotationally mounted.

Typically, the sensor may be mounted to the pump through a conduit located in a stator, such that a portion of the probe protrudes into the above-mentioned internal chamber of the apparatus. If the sensor comprises means for adjusting the position of the probe relative to the casing, such means are positioned on the exterior of the stator to allow ease of adjustment.

In a further aspect, the present disclosure provides a method for preventing failure of an apparatus with at least one moving part and at least one stationary part. The method comprises mounting a sensor as previously described to the apparatus. Accordingly, the sensor is typically mounted at a distance from a moving part of the apparatus, which is typically set by the user of the apparatus, such that if the probe is engaged by the moving part component of the apparatus, a signal is produced, which preferably effects a cut-out switch to cease operation of the apparatus.

Advantageously, the sensor may be fitted during manufacture of the apparatus or may be fitted to an existing apparatus. The ability of the sensor to be retrofitted to an existing apparatus is beneficial as it reduces the costs associated with redesigning or adapting the existing apparatus.

Preferably, the apparatus used in the above method is a compressor pump or a vacuum pump, more preferably a dry vacuum pump comprising a roots, screw, claw, or scroll mechanism, and is most preferably a vacuum Roots booster.

The present invention is, thus, also directed to the use of a sensor as previously described to prevent failure of an apparatus comprising at least one moving part and at least one stationary part, which is preferably a vacuum pump, more preferably a dry vacuum pump, and most preferably a vacuum Roots pump. The sensor prevents the failure of the apparatus by producing a signal if two components of the apparatus come into such proximity as to risk impact. Beneficially, the signal may activate a cut-off switch that ceases the operation of the apparatus. Advantageously, the use of the sensor reduces the risk of failure of apparatus without the requirement of continuous measurement and output of data relating to relative positions of the components of the apparatus.

The present disclosure thus provides a straightforward and extremely effective sensor device for the prevention of failure in a variety of apparatus comprising moving parts. The device may be used in vacuum pumps, in particular dry vacuum pumps and especially vacuum Roots boosters. It provides an efficient cost-effective way of monitoring such apparatus to avoid catastrophic damage, which involves reduced complexity and minimal data output in comparison with the solutions put forward in the art.

### Brief Description of Figures

Preferred features of the present disclosure will now be described, with reference to the accompanying drawings, in which:
Figure 1 is a sectional view of a vacuum pump incorporating a sensor assembly according to an embodiment of the present invention;
Figure 2 is a detailed view of part of a sensor assembly according to an embodiment of the invention;
Figure 3 is a detailed view of an example probe, according to an embodiment of the invention;
Figure 4 is a detailed view of an alternative example probe according to a further embodiment of the invention; and
Figure 5 is a flow diagram illustrating an example method according to an embodiment of the invention.

### Detailed Description

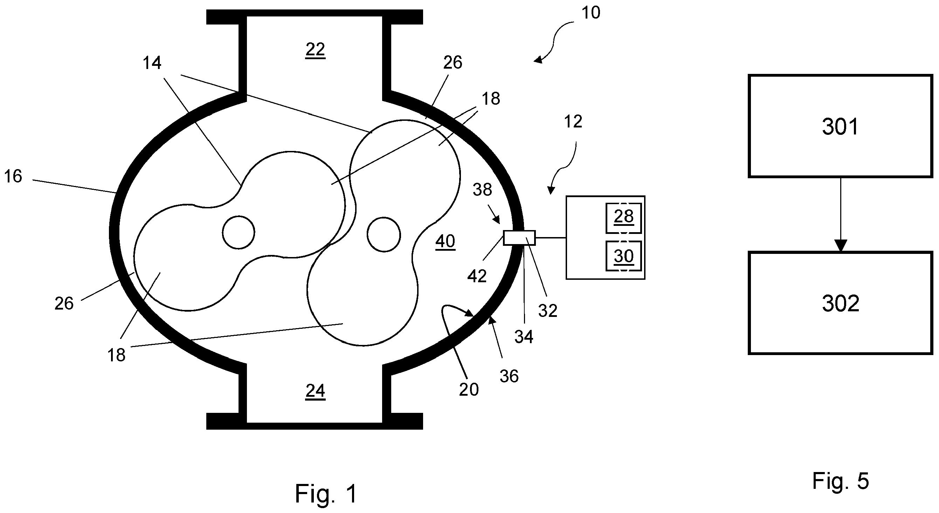

Figure 1 shows a schematic representation of a vacuum pump 10 incorporating a sensor assembly 12 in accordance with an embodiment of the invention. The pump 10 in the illustrated embodiment is a Roots type vacuum pump also referred to as a Roots booster. It will be appreciated that the present invention could be applied to any other type of vacuum pump having parts that move relative to each other. More broadly, the present invention could be applied to other types of pumps or moving apparatus such as compressors.

The pump 10 comprises at least one moving part and one stationary part. In the illustrated example, the pump comprises two moving parts in the form of rotors 14 (sometimes referred to as impellers) that are mounted to rotate within a stationary stator 16 of the pump 10 that surrounds the two rotors 14. Each rotor 14 comprises a plurality of intermeshing lobes 18 which, in use, come in close proximity to an arcuate internal surface 20 of the stator 16 for at least part of their rotational cycle.

The lobes 18 are designed to form an effective seal with the arcuate surface 20 of the stator 16, to drive air that is trapped between adjacent lobes 18 from the inlet port 22 to the outlet port 24 of the pump10.

In use, the rotors 14 rotate in opposite direction to one another and do not touch each other or the stator internal surface 20. As such, there is a gap or clearance 26 between the rotors 14 and the stator 16. In many applications, the clearance 26 is desirably between 0.1 and 0.5 mm when the pump 10 is cold. The size of the clearance 26 between the rotor 14 and the stator 16 is important to the function of the pump 10 and must remain above a predetermined size to ensure safe and effective operation of the pump 10. As described above, operational effects may result in a reduction of the clearance 26 below this predetermined size.

The pump 10 further includes a sensor assembly 12 mounted to the stator 16. The sensor assembly 12 is configured such that, when the clearance 26 between the rotor 14 and the stator 16 is reduced below the predetermined size, the sensor assembly 12 generates a signal. The sensor assembly 12 comprises a sensor circuit 28 configured to generate the signal and a processor 30 configured to receive the signal and generate an output. In embodiments, the processor 30 is configured to generate an output that triggers a shut-down process to cease operation of the pump 10. In embodiments, the shut-down process includes communication with a controller (not shown) for controlling the operation of the pump 10 for performing a controlled shutdown process such a pulsed shut-down process as described in WO 2004/038222 or a ramped shut-down process as known in the art. Alternatively, the output may trigger a cut-off switch for immediate shut-down of the pump 10.

The sensor assembly comprises a probe 32, which is seated in a bore 34 which extends radially through the side wall of the stator 16 from an external surface 36 to the arcuate internal surface 20 thereof. A portion 38 of the probe 32 extends beyond the arcuate internal surface 20 into an internal cavity 40 of the pump 10 such that an end surface 42 of the probe 32 contacts or engages the rotor 14 when the clearance 26 is below a predetermined value. In embodiments, the predetermined value represents a clearance size at which operation of the pump 10 may be compromised, for example, beyond which the risk of seizure is unacceptable.

During normal use, when an acceptable size of clearance 26 exists between the rotor 14 and stator 16 exists, the probe 32 and the sensor circuit 28 together form a portion of an incomplete circuit such that no signal is produced by the circuit. However, when the clearance 26 reduces to the predetermined value, i.e. the clearance is too small, the probe 32 is engaged by the rotor 14. Engagement of the probe 32 with the rotor 14 causes the circuit formed by the probe 32 and sensor circuit 28 to be completed and a signal to be produced by the sensor assembly 12.

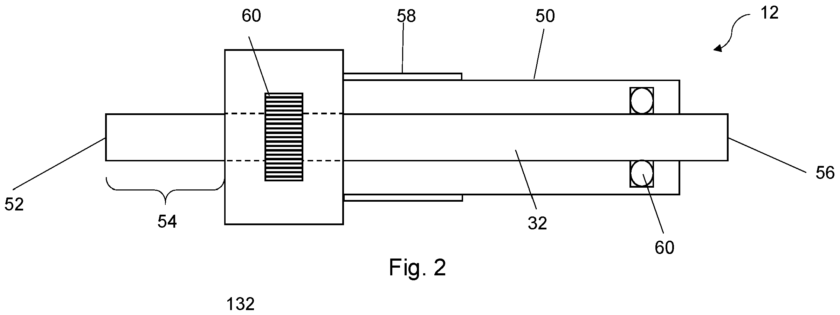

Figure 2 shows an enlarged version of a portion of the sensor assembly 12, according to an embodiment. In the illustrated example, the sensor assembly 12 comprises a probe 32 as described above. The assembly 12 further comprises a casing 50, wherein the casing 50 substantially surrounds or sheathes at least a portion of the probe 32. At a first end 52 of the probe 32, a portion 54 of the probe 32 protrudes from the casing 50 and is configured to, in use, engage with a moving part of an apparatus such as the rotor 14 of a pump 10 described in relation to Figure 1 above. At a second, opposing end 56 of the probe 32, the probe 32 is configured to connect to a sensor circuit as described above to form an incomplete electric circuit.

The casing 50 comprises means 58 for mounting the sensor assembly to an apparatus such as the pump stator 16 described above. In the illustrated embodiment, the means 58 comprises an external thread on the casing 50 configured to engage an internal thread of the apparatus such as the bore 34 of the pump 10 of Figure 1. The casing 50 further comprises means 60 for adjusting the position of the probe 32 relative to the casing 50, in this example, the means for adjusting the position of the probe 32 relative to the casing 50 comprises a thumbwheel 60. The thumbwheel 60 is configured such that manual manipulation of the thumbwheel causes axial movement of the probe in one or two directions relative to the casing 50 to allow the portion 54 of the probe 32 protruding from the casing 50 to be adjusted as required, for example where the predetermined size/value of the clearance needs to be adjusted or tuned. In alternative embodiments, the casing 50 and/or probe 32 may comprise means (not shown) for adjusting both the casing 50 and probe 32 together relative to the apparatus to which it is mounted such that the predetermined value can be adjusted or tuned as required.

As shown in Figure 2, the assembly further comprises an O-ring seal 60 which extends around the probe inside the casing 50 and forms a seal between the probe 32 and the casing 50 to reduce or prevent leakage of gas along the probe 32, for example towards the internal cavity 40 of the pump 10.

In the example shown in Figure 2, the probe 32 is formed from a single electrode such that, in use, if engaged by an electrically conductive moving component of the apparatus to which the sensor assembly is mounted, an electric circuit to which the probe 32 is connected is completed through the sensor assembly and apparatus, and a signal is output by the circuit.

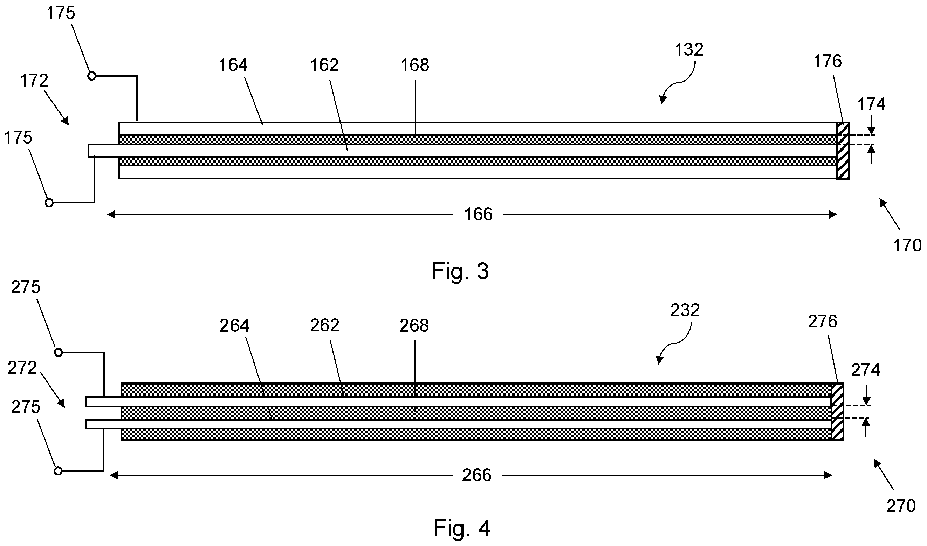

With reference to Figure 3, an alternative probe 132 is shown. In this example, the probe 132 comprises two electrodes 162, 164 extending along the longitudinal length 166 of the probe 132. A first electrode 162 comprises a conductive wire extending generally centrally throughout the length of the probe 132. A second electrode 164 comprises a conductive tube surrounding and substantially concentric with the first electrode 162. The probe 132 further comprises an electrically insulating body 168, which is positioned between the first and second electrodes 162, 164 to electrically isolate the electrodes 162, 164 from each other along the length 166 of the probe 132. In one embodiment, the insulating body 168 comprises an adhesive such as an epoxy resin which can also be used to secure the two electrodes 162, 164 relative to each other.

At a first end 170 of the probe 132, the electrodes 162, 164 are exposed from the insulating body 168 to define an annular gap 174 between each electrode 162, 164 configured to form a physical break in a circuit of the sensor assembly 12 described above. At a second, opposing end 172 of the probe 132, the electrically conductive electrodes 162, 164 are configured to be coupled to an electric circuit as described above via connections 175 as known in the art. In use, if the gap 174 between the exposed ends of the electrodes 162, 164 is bridged by an electrically conductive component of the apparatus to which the sensor assembly is mounted, the circuit is complete, and a signal is output.

The probe 132 illustrated in Figure 3 may be incorporated into a casing as described with respect to Figure 2 above. In such an embodiment, the casing is preferably formed from an electrically insulating material in order to prevent conductance through the surrounding structure of the assembly and pump.

The probe 132 further comprises a sacrificial layer 176 at the first end 170. The sacrificial layer 176 extends over the portions of the electrodes which are exposed from the insulating body 168 of the probe 132. The sacrificial layer 176 is configured to be at least partially removed when engaged by a moving component. For example, when used in the arrangement of Figure 1, the sacrificial layer 176 may be sheared off the end 170 of the probe 132 when engaged by the rotating rotor 14 of the pump 10 to which probe 132, forming part of the sensor assembly 12, is mounted. Removal of the sacrificial layer 176 exposes the ends of the electrodes 162, 164 allowing the rotor 14 to bridge the gap 174 between the electrodes 162, 164 and thereby complete the circuit.

Figure 4 illustrates another alternative probe 232 for use in the assembly of the invention. The probe comprises two electrodes 262, 264 each comprising a conductive wire extending along the length 266 of the probe 232. The two electrodes 262, 264 are generally parallel to each other and are parallel but offset from a central axis of the probe 232.

The probe 232 further comprises an electrically insulating body 268, which surrounds the first and second electrodes 262, 264 to electrically isolate the electrodes 162, 164 from each other along the length 266 of the probe 232 in a similar way to the the insulating body of the embodiment of Figure 3. The insulating body 268 may be formed from the same materials described above in relation to the insulating body 168 of Figure 3.

Referring back to Figure 4, at a first end 270 of the probe 232, the electrodes 262, 264 are exposed from the insulating body 168 to define a gap 274 between the two electrodes 262, 264 configured to form a physical break in a circuit of the sensor assembly 12 described above. At a second, opposing end 272 of the probe 232, the electrically conductive electrodes 262, 264 are configured to be coupled to an electric circuit as described above via connections 275 as known in the art. In use, if the gap 274 between the exposed ends of the electrodes 262, 264 is bridged by an electrically conductive component of the apparatus to which the sensor assembly is mounted, the circuit is complete, and a signal is output.

The probe 232 of Figure 4 further comprises a sacrificial layer 276 at the first end 270. The sacrificial layer 276 extends over the portions of the electrodes which are exposed from the insulating body 268 of the probe 132 in much the same way as described in relation to the probe 132 of Figure 3. As such, the sacrificial layer 276 is configured to be at least partially removed when engaged by a moving component. For example, when used in the arrangement of Figure 1, the sacrificial layer 276 may be sheared off the end 270 of the probe 232 when engaged by the rotating rotor 14 of the pump 10 to which probe 232, forming part of the sensor assembly 12, is mounted. Removal of the sacrificial layer 276 exposes the ends of the electrodes 262, 264 allowing the rotor 14 to bridge the gap 274 between the electrodes 262, 264 and thereby complete the circuit.

The probe 232 illustrated in Figure 4 may also be incorporated into a casing. However, the casing may not need to be formed from an electrically insulating material as both the electrodes 262, 264 are contained within the electrically insulating body 168. As such, the casing material may be selected from a wider range of materials.

Figure 5 is a flow diagram showing an example method for preventing failure of an apparatus comprising at least one moving part and at least one stationary part according to a further embodiment of the invention. The method includes first mounting a sensor assembly to the stationary part of the apparatus at step 301. The sensor assembly used in the exemplary method may have the features of any of the embodiments described above such that it is operable to produce a signal when the sensor detects a minimum clearance exists. The sensor may be mounted such that the sensor may detect when a minimum clearance exists between the moving part and the stationary part. The mounting step may be performed during original manufacture of the apparatus or may be 'retro-fit' on an existing pump after original manufacture.

The method further comprises a step 302 of shutting down operation of the apparatus when the sensor produces a signal. The signal, as described above, is indicative of a minimum clearance between the stationary part and moving part. The shutting down operation may be performed automatically upon generation of the signal by an associated control system or the signal may alert an operator of the apparatus to manually perform the shut-down.

## Claims

1. A sensor assembly (12) for use in an apparatus comprising at least one moving part and at least one stationary part, the sensor assembly comprising:
a probe (132) comprising a portion of an incomplete circuit and configured to form a complete circuit when engaged by the at least one moving part; and
a casing (50) configured to sheathe a first portion of the probe such that, in use, a second portion of the probe (54) protrudes from the casing, and wherein the casing comprises a means (58) for mounting the sensor to the stationary part of the apparatus, wherein the assembly is configured to produce a signal when the circuit is completed; and
**characterised in that**
the probe (132) comprises at least two electrodes, wherein one electrode is a positive electrode (162) and one electrode is a negative electrode (164), wherein the at least two electrodes are separated by an electrically insulating body (168), and wherein a portion of each electrode is exposed from the electrically insulating body; and
**in that** at least a part of the exposed portion of each of the electrodes is covered by a sacrificial coating (176) comprising an electrically insulating paint or lacquer such that, in use, when the sacrificial coating is contacted by the moving part of the apparatus, at least part of the coating is removed from each electrode and the circuit is completed.

2. The sensor assembly (12) of claim 1, wherein the assembly is configured to activate a shut-down process (302) of the apparatus when the signal is produced.

3. The sensor assembly (12) of claim 2, wherein the shut-down process is one of a pulsed shut-down or a ramped shutdown process.

4. The sensor assembly (12) of any preceding claim, wherein the assembly further comprises means for adjusting the position (60) of the probe relative to the casing.

5. The sensor assembly (12) of claim 4, wherein the means for adjusting the position of the probe relative to the casing comprises a cam mechanism or a lever mechanism acting on the probe, or an external screw thread which is adapted to operatively engage with the means for adjusting the position of the probe relative to the casing.

6. The sensor assembly of any preceding claim, wherein the portion of each electrode that is exposed from the insulating body is comprised in a portion of the probe protruding from the casing.

7. Use of the sensor assembly of any preceding claim in a vacuum pump (10), wherein the at least one moving part comprises a rotor (14) and the at least one stationary part comprises a stator (16).

8. A vacuum pump (10) comprising:
a sensor assembly as defined in any of claims 1 to 6; and
at least one rotor (14) and at least one stator (16), wherein the stator comprises at least one internal chamber in which the at least one rotor is rotationally mounted and the sensor is mounted to the stator through a conduit located in the stator such that a portion of the probe protrudes into the internal chamber.

9. A method for preventing failure of an apparatus comprising at least one moving part and at least one stationary part, the method comprising:
mounting a sensor assembly as defined in any of claims 1 to 7 to a stationary part of the apparatus; and
shutting down operation (302) of the apparatus when the sensor produces the signal.

10. The method of claim 9, wherein shutting down of the apparatus is performed automatically upon production of the signal.

11. A method according to claim 9 or claim 10 wherein the sensor is fitted during manufacture of the apparatus.

12. A method according to claim 9 or claim 10 wherein the sensor is fitted to an existing apparatus.

## Patentansprüche

1. Sensoranordnung (12) zur Verwendung in einer Vorrichtung mit mindestens einem beweglichen Teil und mindestens einem stationären Teil, wobei die Sensoranordnung aufweist:
eine Sonde (132), die einen Abschnitt eines unvollständigen Stromkreises aufweist und dazu konfiguriert ist, einen vollständigen Stromkreis zu bilden, wenn sie mit dem mindestens einen beweglichen Teil in Eingriff steht; und
ein Gehäuse (50), das zur Umhüllung eines ersten Abschnitts der Sonde in der Weise konfiguriert ist, dass in Verwendung ein zweiter Abschnitt der Sonde (54) aus dem Gehäuse herausragt, und wobei das Gehäuse ein Mittel (58) zur Montage des Sensors an den stationären Teil der Vorrichtung aufweist, wobei die Anordnung dazu konfiguriert ist, ein Signal zu erzeugen, wenn der Stromkreis vervollständigt ist; und
**dadurch gekennzeichnet, dass**
die Sonde (132) mindestens zwei Elektroden aufweist, wobei eine Elektrode eine positive Elektrode (162) und eine Elektrode eine negative Elektrode (164) ist, wobei die mindestens zwei Elektroden durch einen elektrisch isolierenden Körper (168) getrennt sind und wobei ein Abschnitt jeder Elektrode von dem elektrisch isolierenden Körper freiliegt; und
dass mindestens ein Teil des freiliegenden Abschnitts jeder der Elektroden mit einer Opferbeschichtung (176) bedeckt ist, die eine elektrisch isolierende Farbe oder einen elektrisch isolierenden Lack aufweist, so dass in Verwendung, wenn die Opferbeschichtung von dem sich bewegenden Teil der Vorrichtung berührt wird, mindestens ein Teil der Beschichtung von jeder Elektrode entfernt wird und der Stromkreis vervollständigt wird.

2. Sensoranordnung (12) nach Anspruch 1, wobei die Anordnung dazu konfiguriert ist, einen Abschaltvorgang (302) der Vorrichtung zu aktivieren, wenn das Signal erzeugt wird.

3. Sensoranordnung (12) nach Anspruch 2, wobei der Abschaltvorgang ein gepulster Abschaltvorgang oder ein rampenförmiger Abschaltvorgang ist.

4. Sensoranordnung (12) nach einem der vorhergehenden Ansprüche, wobei die Anordnung ferner ein Mittel zum Einstellen der Position (60) der Sonde relativ zum Gehäuse aufweist.

5. Sensoranordnung (12) nach Anspruch 4, wobei das Mittel zum Einstellen der Position der Sonde relativ zum Gehäuse einen Nockenmechanismus oder einen Hebelmechanismus, der auf die Sonde wirkt, oder ein Außengewinde aufweist, das dazu eingerichtet ist, mit dem Mittel zum Einstellen der Position der Sonde relativ zum Gehäuse in Wirkverbindung zu stehen.

6. Sensoranordnung nach einem der vorhergehenden Ansprüche, wobei der Abschnitt jeder Elektrode, der von dem isolierenden Körper freiliegt, in einem Teil der Sonde enthalten ist, der aus dem Gehäuse herausragt.

7. Verwendung der Sensoranordnung nach einem der vorhergehenden Ansprüche in einer Vakuumpumpe (10), wobei der mindestens eine bewegliche Teil einen Rotor (14) und der mindestens eine stationäre Teil einen Stator (16) aufweist.

8. Eine Vakuumpumpe (10), die Folgendes aufweist:
eine Sensoranordnung gemäß einem der Ansprüche 1 bis 6 und
mindestens einen Rotor (14) und mindestens einen Stator (16), wobei der Stator mindestens eine innere Kammer aufweist, in der der mindestens eine Rotor drehbar gelagert ist, und der Sensor am Stator durch einen im Stator angeordneten Durchgang so montiert ist, dass ein Teil der Sonde in die innere Kammer hineinragt.

9. Verfahren zur Verhinderung des Ausfalls einer Vorrichtung mit mindestens einem beweglichen Teil und mindestens einem stationären Teil, wobei das Verfahren Folgendes aufweist:
Montieren einer Sensoranordnung gemäß einem der Ansprüche 1 bis 7 an einen stationären Teil der Vorrichtung und
Abschalten des Betriebs (302) des Geräts, wenn der Sensor das Signal erzeugt.

10. Verfahren nach Anspruch 9, wobei die Abschaltung des Geräts bei der Erzeugung des Signals automatisch erfolgt.

11. Verfahren nach Anspruch 9 oder Anspruch 10, wobei der Sensor während der Herstellung des Geräts angebracht wird.

12. Verfahren nach Anspruch 9 oder Anspruch 10, wobei der Sensor an einem vorhandenen Gerät angebracht wird.

## Revendications

1. Ensemble de capteur (12) pour utilisation dans un appareil comprenant au moins une partie mobile et au moins une partie stationnaire, l'ensemble de capteur comprenant :
une sonde (132) comprenant une partie d'un circuit incomplet et configurée pour former un circuit complet lorsqu'elle est engagée par ladite au moins une partie mobile ; et
un boîtier (50) configuré pour rengainer une première partie de la sonde de sorte que, en cours d'utilisation, une deuxième partie de la sonde (54) fasse saillie depuis le boîtier, et dans lequel le boîtier comprend un moyen (58) pour monter le capteur sur la partie stationnaire de l'appareil, dans lequel l'ensemble est configuré pour produire un signal lorsque le circuit est complété ; et
**caractérisé en ce que**
la sonde (132) comprend au moins deux électrodes, dans lequel une électrode est une électrode positive (162) et une électrode est une électrode négative (164), dans lequel lesdites au moins deux électrodes sont séparées par un corps électriquement isolant (168), et dans lequel une partie de chaque électrode est exposée depuis le corps électriquement isolant ; et
**en ce que**
au moins une partie de la partie exposée de chacune des électrodes est recouverte par une couche sacrificielle (176) comprenant une peinture ou une laque électriquement isolante de sorte que, en cours d'utilisation, lorsque le couche sacrificielle vient en contact avec la partie mobile de l'appareil, au moins une partie de la couche est retirée de chaque électrode et le circuit est complété.

2. Ensemble de capteur (12) selon la revendication 1, l'ensemble étant configuré pour activer un processus de mise à l'arrêt (302) de l'appareil lorsque le signal est produit.

3. Ensemble de capteur (12) selon la revendication 2, dans lequel le processus de mise à l'arrêt est l'un parmi un processus de mise à l'arrêt pulsée ou un processus de mise à l'arrêt à rampe.

4. Ensemble de capteur (12) selon l'une quelconque des revendications précédentes, l'ensemble comprenant en outre un moyen de réglage de la position (60) de la sonde par rapport au boîtier.

5. Ensemble de capteur (12) selon la revendication 4, dans lequel le moyen de réglage de la position de la sonde par rapport au boîtier comprend un mécanisme de came ou un mécanisme de levier agissant sur la sonde, ou un filetage de vis externe qui est adapté pour venir en prise fonctionnellement avec le moyen de réglage de la position de la sonde par rapport au boîtier.

6. Ensemble de capteur selon l'une quelconque des revendications précédentes, dans lequel la partie de chaque électrode qui est exposée depuis le corps isolant est comprise dans une partie de la sonde faisant saillie depuis le boîtier.

7. Utilisation de l'ensemble de capteur selon l'une quelconque des revendications précédentes dans une pompe à vide (10), dans laquelle ladite au moins une partie mobile comprend un rotor (14) et ladite au moins une partie stationnaire comprend un stator (16).

8. Pompe à vide (10) comprenant :
un ensemble de capteur tel que défini dans l'une quelconque des revendications 1 à 6 ; et
au moins un rotor (14) et au moins un stator (16), dans laquelle le stator comprend au moins une chambre interne dans laquelle ledit au moins un rotor est monté de façon rotative et le capteur est monté sur le stator par l'intermédiaire d'un conduit situé dans le stator de sorte qu'une partie de la sonde fasse saillie dans la chambre interne.

9. Procédé de prévention de défaillance d'un appareil comprenant au moins une partie mobile et au moins une partie stationnaire, le procédé comprenant :
le montage d'un ensemble de capteur tel que défini dans l'une quelconque des revendications 1 à 7 sur une partie stationnaire de l'appareil ; et
une opération de mise à l'arrêt (302) de l'appareil lorsque le capteur produit le signal.

10. Procédé selon la revendication 9, dans lequel la mise à l'arrêt de l'appareil est effectuée automatiquement lors de la production du signal.

11. Procédé selon la revendication 9 ou la revendication 10, dans lequel le capteur est installé pendant la fabrication de l'appareil.

12. Procédé selon la revendication 9 ou la revendication 10, dans lequel le capteur est installé sur un appareil existant.
